# EUROPEAN PATENT SPECIFICATION

(11) **EP 3 330 109 B1**
(45) Date of publication and mention of the grant of the patent: **01.07.2020**
(21) Application number: 17205493.4
(22) Date of filing: 05.12.2017
(51) Int. Cl.: B60C 23/04, B60C 19/00

(54) **WHEEL IMBALANCE DETECTION SYSTEM AND METHOD**
RADUNWUCHTERKENNUNGSSYSTEM UND VERFAHREN
SYSTÈME DE DÉTECTION DE BALOURD DES ROUES ET PROCÉDÉS

(30) Priority: 05.12.2016 US 201662430025 P; 30.10.2017 US 201715796932
(43) Date of publication of application: 06.06.2018
(73) Proprietor: The Goodyear Tire & Rubber Company, Akron, OH 44316 (US)
(72) Inventor: SINGH, Kanwar Bharat, 7363 Lorentzweiler (LU); HERZFELD, Eric Michael, New York, NY 10025 (US)
(74) Representative: Kutsch, Bernd

(56) References cited:
- EP-A1- 2 586 629
- EP-A2- 0 421 065
- EP-A2- 1 281 950
- KR-A- 20130 064 344

## Description

### Field of the Invention

The invention relates generally to tire monitoring systems for collecting measured tire parameter data during vehicle operation and, more particularly, to an apparatus, system and method for detecting a wheel imbalance during vehicle operation.

### Background of the Invention

Vehicle-mounted tires may be monitored by tire pressure monitoring systems (TPMS) which measure tire parameters such as pressure and temperature during vehicle operation. Data from TPMS tire-equipped systems is used to ascertain the status of a tire based on measured tire parameters and alert the driver of conditions, such as low tire pressure or leakage, which may require remedial maintenance. Sensors within each tire are typically installed in a green or uncured tire and then subject to cure at high temperatures. The high temperature and pressure can damage the sensor. Furthermore, additional cost is typically associated with mounting the sensor in the tire. It is generally desired to have a tire sensor that is durable enough to sustain 60 million cycles. Further, the location of the sensor makes it extremely difficult to replace if the sensor stops functioning.

Other factors such as tire wear state are important considerations for vehicle operation and safety. It is accordingly further desirable to measure tire wear state and communicate wear state to vehicle systems such as braking and stability control systems in conjunction with the measured tire parameters of pressure and temperature.

EP-A-1 281 950 describes a method in accordance with the preamble of claim 1. The method is used in a tire and suspension warning and monitoring system. A similar system and method is also known from EP-A-0 421 065.

KR-A-10-2013-0064344 describes a vehicle wheel balance diagnostic device and method to determine whether vehicle wheels are balanced or not using a power spectrum value with respect to a wheel rotation frequency of acceleration signals.

EP-A-2 586 629 describes a tire internal failure determination method for accurately determining internal failures such as separations. The method uses radial acceleration signals of the tire using vehicular travel detected by an acceleration sensor attached to the inner surface of the tire.

### Summary of the Invention

The invention relates to a method in accordance with claim 1, to an apparatus in accordance with claim 9 and to a system in accordance with claims 10 or 11 respectively.

Dependent claims refer to preferred embodiments of the invention.

According to a preferred aspect of the invention, a tire or wheel imbalance detection system includes a sensor for measuring vertical acceleration of the tire. The sensor is preferably mounted on the wheel or rim, but may also be mounted elsewhere. The system senses the vertical acceleration signal, and preferably continuously monitors the vertical acceleration signal in a specified frequency domain. When the amplitude of the signal exceeds a threshold amount, a notification alert is sent to a user.

### Definitions

"ANN" or "Artificial Neural Network" is an adaptive tool for non-linear statistical data modeling that changes its structure based on external or internal information that flows through a network during a learning phase. ANN neural networks are non-linear statistical data modeling tools used to model complex relationships between inputs and outputs or to find patterns in data.
"Axial" and "axially" means lines or directions that are parallel to the axis of rotation of the tire.
"Circumferential" means lines or directions extending along the perimeter of the surface of the annular tread perpendicular to the axial direction.
"MSE" is an abbreviation for Mean square error, the error between and a measured signal and an estimated signal which the Kalman Filter minimizes.
"PSD" is Power Spectral Density (a technical name synonymous with FFT (Fast Fourier Transform).
"Radial" and "radially" means directions radially toward or away from the axis of rotation of the tire.

### Brief Description of the Drawings

The invention will be described by way of example and with reference to the accompanying drawings in which:
FIG. 1 is a flow chart of a wheel imbalance system process;
FIG. 2a is a front view of a wheel and sensor assembly;
FIG. 2b is a close up view of the sensor mounted on the wheel;
FIG. 3 is a schematic of a sensor system;
FIG. 4 is an exemplary acceleration signal;
FIG. 5 is a frequency graph showing an amplitude vs. frequency of the vertical acceleration signal, and particularly illustrating wheel hop and tire vertical mode;
FIG. 6 is a frequency graph showing an amplitude vs. frequency of the vertical acceleration signal that has been filtered to eliminate all but the wheel hop mode;
FIG. 7 is a schematic of a cross-section of a wheel which illustrates a rotational imbalance;
FIG. 8 compares a processed acceleration signal for a balanced and unbalanced wheel; and

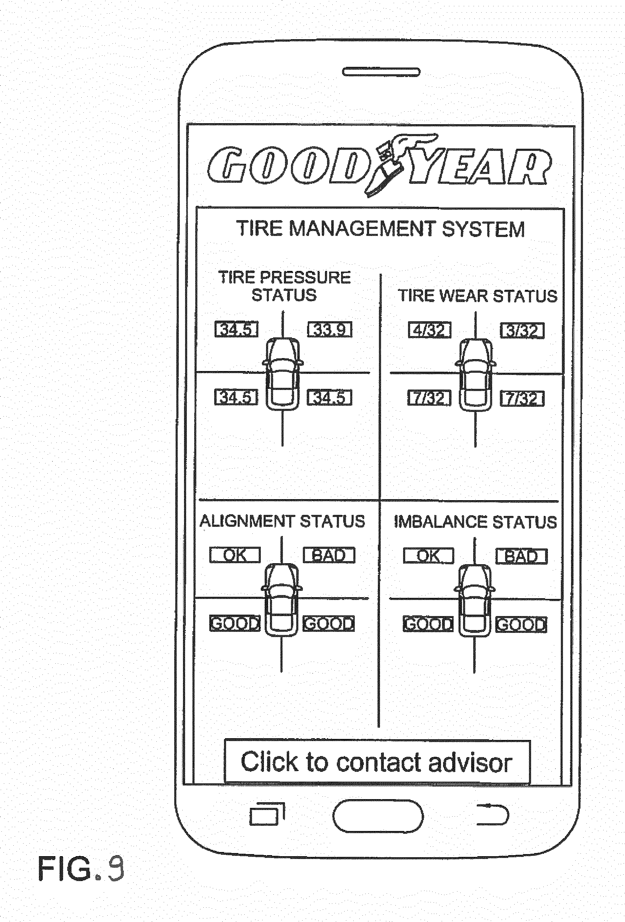

FIG. 9 illustrates a display of results on a user's cellphone.

### Detailed Description of Example Embodiments of the Invention

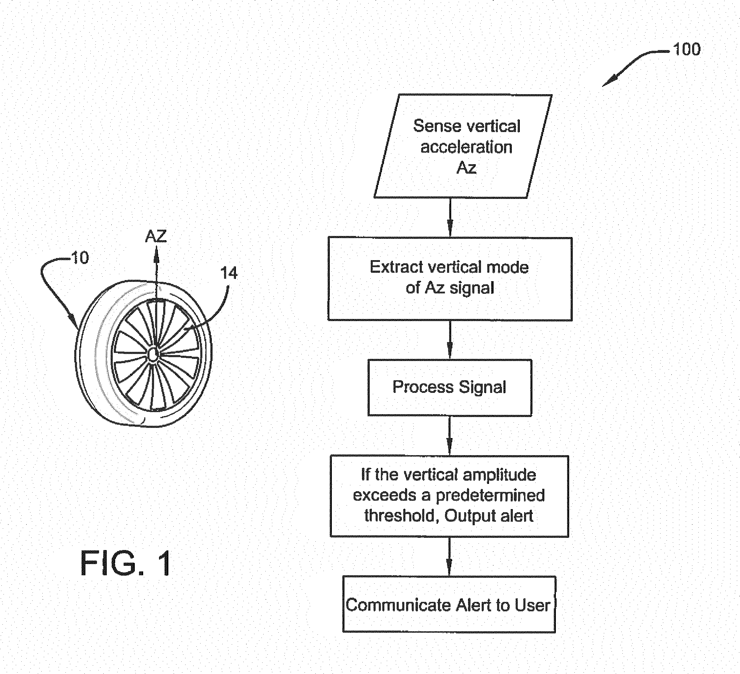

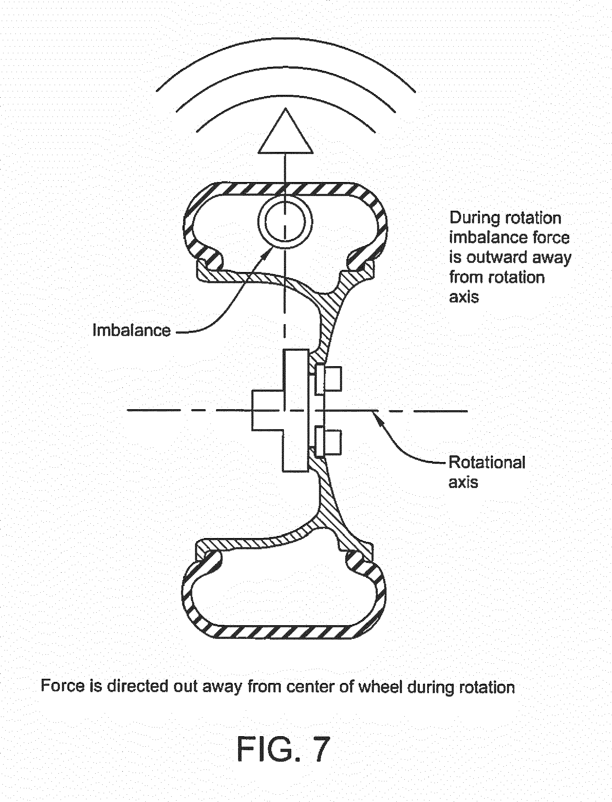

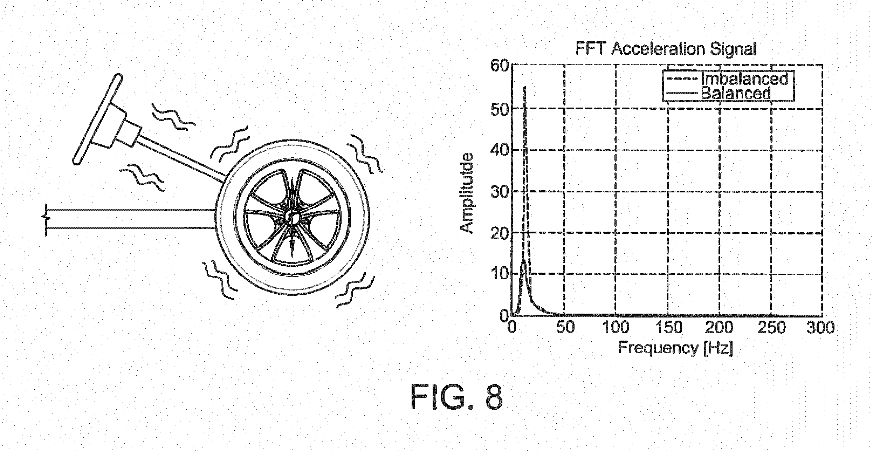

Referring to FIG. 1, a wheel imbalance detection system 100 is illustrated. The wheel imbalance detection system 100 is based upon the spectral analysis of the tire vibration signal. Such a system is useful in advising a vehicle owner on whether their tire is in a dynamically balanced state or whether the wheel needs serviced. As shown in Figure 7, a wheel that is imbalanced during rotation results in an outward force that is directed in an opposite radial direction from the wheel center. During operation of the vehicle as shown in Figure 8, a driver will normally feel vibrations transmitted to the steering wheel, but will not know for sure the source of the vibration.

As shown in Figure 1, a representative wheel 10 is shown that is typically mounted upon a vehicle. The wheel 10 includes a tire 12 that is mounted upon a rim 14. The tire includes is typically mounted to a vehicle and includes a ground-engaging tread region 14 that wears over time.

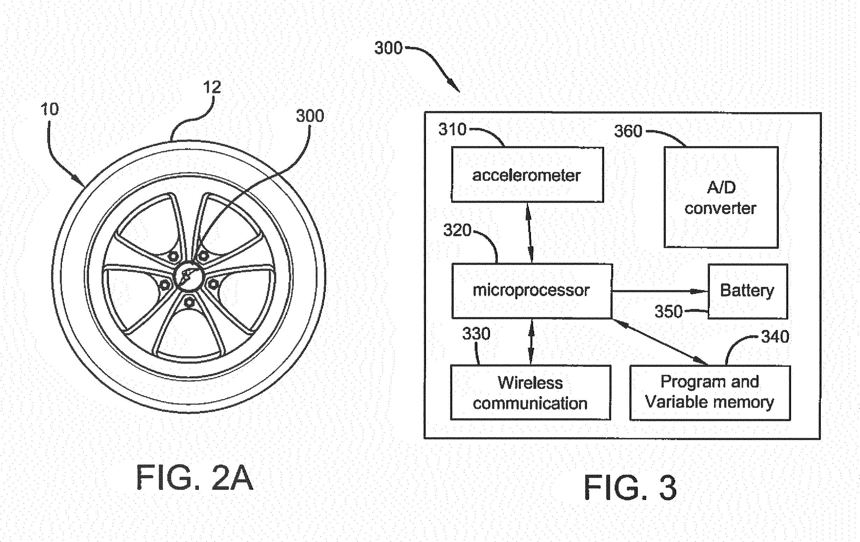

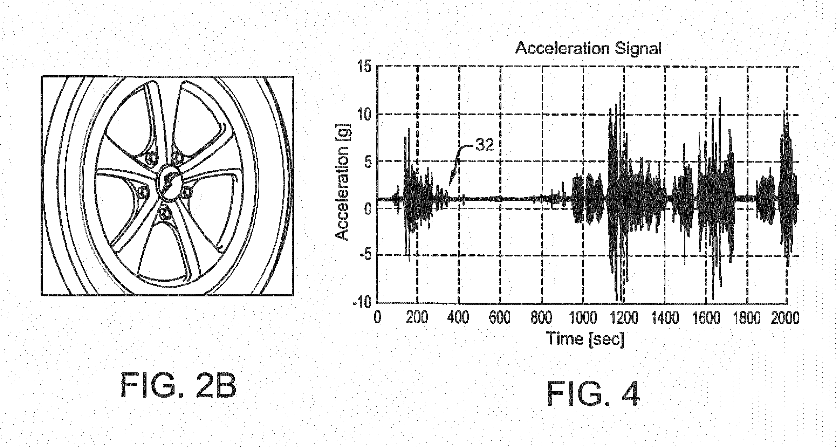

As shown in Figure 2a, the wheel imbalance detection system 100 includes a sensor module 300 that is preferably mounted on the wheel 10. The sensor module 300 may also be mounted on a lug nut, valve stem, on the tire and inside the tire cavity or outside the tire cavity, on the rim, axle, hub, unsprung mass of the vehicle or vehicle suspension strut. The sensor module 300 preferably includes an accelerometer 310. The accelerometer 310 is preferably oriented to sense the radial or vertical acceleration Ax. As shown in Figure 2a, the sensor module 300 is located on the wheel in an accessible position. As shown in Figure 3, the sensor module 300 includes a micro-processor 320, wireless communication means 330 such as blue tooth, or other wireless communication means, data storage means 340, battery or power means 350 and an analog digital convertor 360. One sensor module 300 suitable for use with the invention is a Texas Instruments CC 2650 wireless MCU, sold by Texas Instruments.

Figure 1 describes the steps of the wheel imbalance detection system. The first step of the system is to sense the vertical acceleration signal Az measured by the sensor module 300. The system input may also optionally include the longitudinal acceleration or radial acceleration signal, as described in more detail, below.

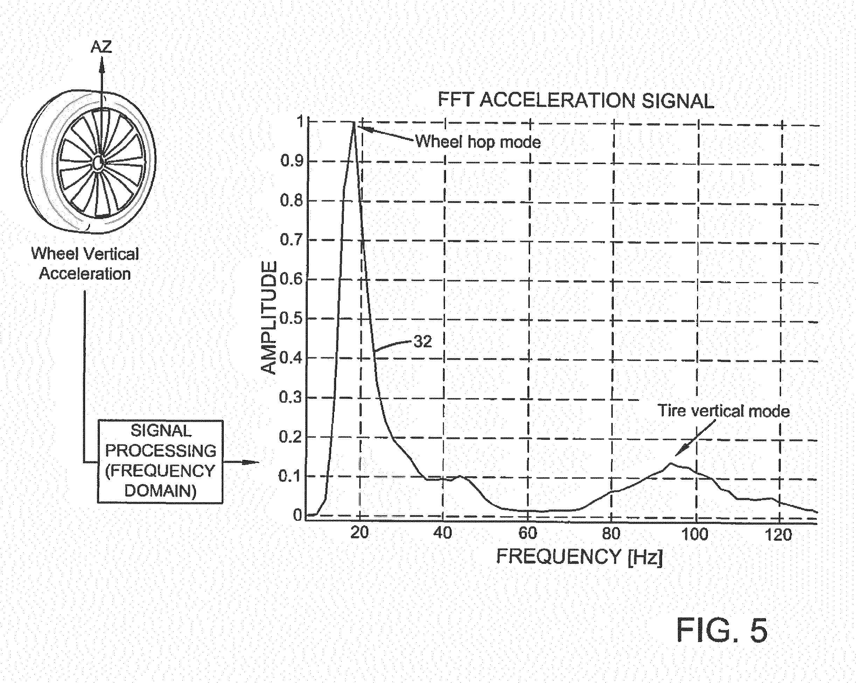

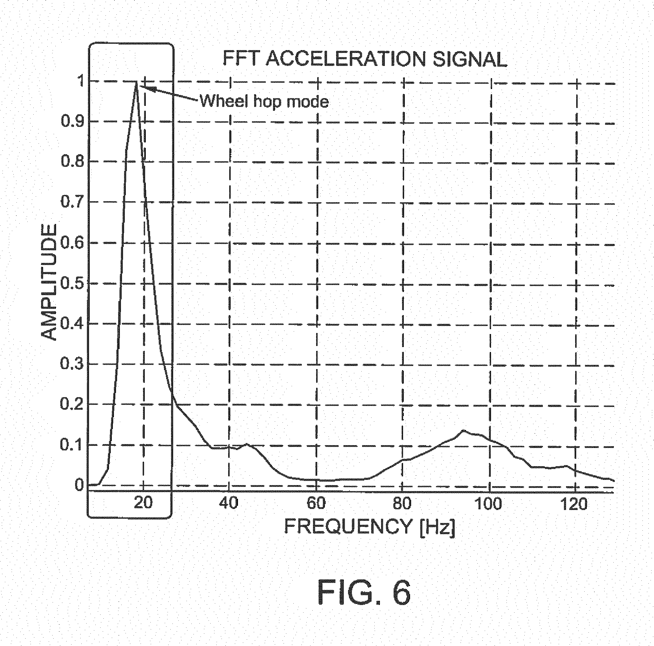

Figure 4 illustrates an exemplary raw vertical acceleration signal Az 32 shown in the time domain. The Az signal 32 is then digitized by the A/D convertor 360 and then processed in the frequency domain by the microprocessor 320 of the sensor module. As shown in Figure 5, the signal illustrates the signal peak at 18 Hz known as wheel hop. Wheel hop is typically representative around 12-15 Hz and is the vibration of the tire belt and rim. The wheel hop vertical mode depends mainly on suspension spring properties supporting the test wheel and tire and the overall tire stiffness. The Az signal 32 also shows a second signal peek at 90 Hz known as tire vertical mode. The tire vertical mode is typically in the frequency range of 90-100 HZ, and is representative of the tire belt vertical vibration. The Az signal is processed by the microprocessor of the sensor module 30 using a bandpass filter in the 0-120 hz range to isolate the wheel hop mode. The tire vertical mode was determined by means of an FFT (Fast Fourier Transform) analysis. The FFT analysis, conventionally used as a signal processing tool, yields tire vibration modes including the vertical mode represented in the subject graphs. As used herein, FFT is an algorithmic tool which operates by decomposing an *N* point time domain signal into *N* time domain signals each composed of a single point. The second step is to calculate the *N* frequency spectra corresponding to these *N* time domain signals. Lastly, the *N* spectra are synthesized into a single frequency spectrum. Figure 6 illustrates the Az signal which has been processed as described.

Next, after the Az signal has been processed, it is compared with a predetermined threshold value to determine if the Az signal exceeds the threshold value. If the vertical acceleration signal exceeds an alarm threshold value, it is communicated to a user or vehicle by a wireless communication means, such as Blue Tooth.

More preferably, the above sensor module 300 senses the Tire ID, and uses the Tire ID information to retrieve the threshold value from memory. Preferably, the threshold value is determined experimentally for a given type of tire.

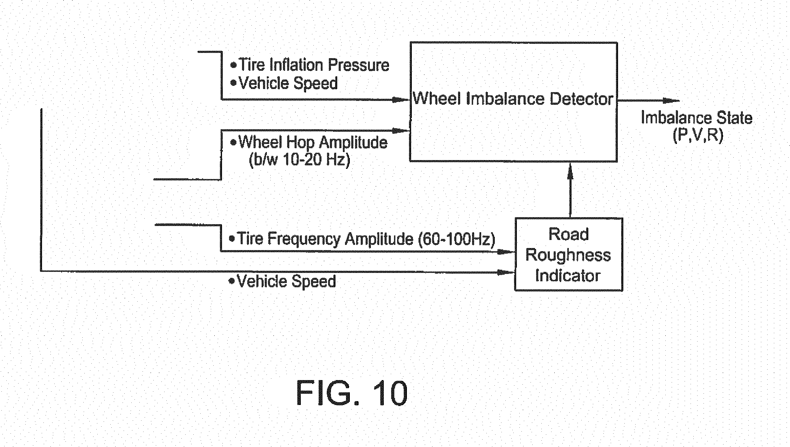

A second embodiment of the invention is shown in Figure 10. A wheel imbalance detection apparatus is shown which outputs the imbalanced state of a tire based upon input data to the apparatus. The input data includes a tire acceleration signal from a sensor mounted on the wheel or on the tire. For greater accuracy, the input data may also include one or more of the following: tire pressure, vehicle speed and road roughness. The wheel imbalance detection system uses known calibration data to train the system algorithm which includes vehicle speed, tire inflation pressure for a vehicle having properly inflated and balanced tires and road roughness. The vehicle speed is also known from either measuring via a sensor, or input from the vehicle can bus system or manual input. A sensor is preferably mounted on the hub of each wheel for measuring the vertical acceleration signal in real time.

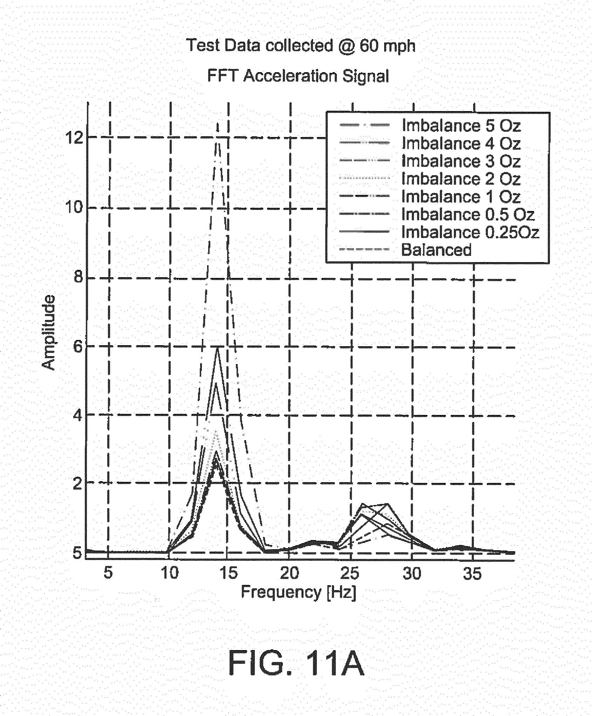

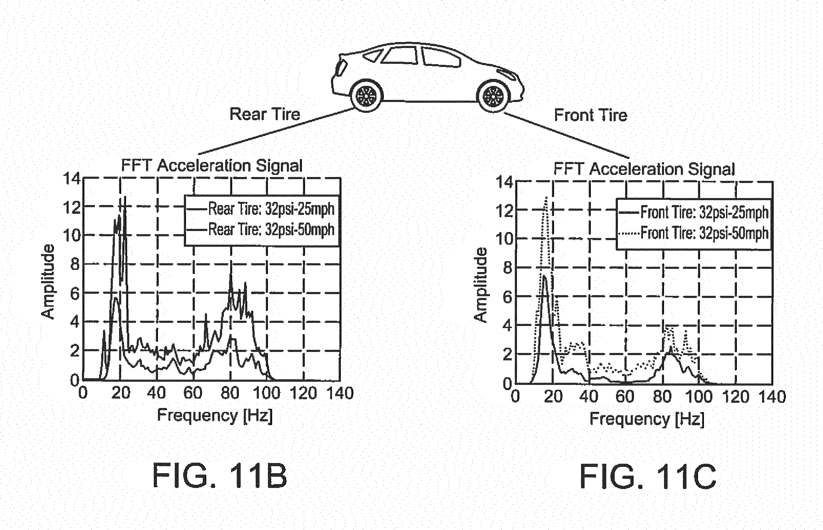

Figure 11A illustrates vertical acceleration signal data for a tire travelling at 60 mph, with different levels of imbalance. The peak of the curve or wheel hop value in the 10 to 20 hz range appears to scale linearly with the level of imbalance. A wheel hop value is extracted from the peak of the wheel vertical acceleration signal. As further shown in Figures 11B and 11C, the magnitude of the wheel hop value is a function of vehicle speed and appears to scale linearly with vehicle speed. A first data set is created having a range of wheel hop amplitudes that is measured over a range of speeds at a known tire inflation pressure and vehicle speed.

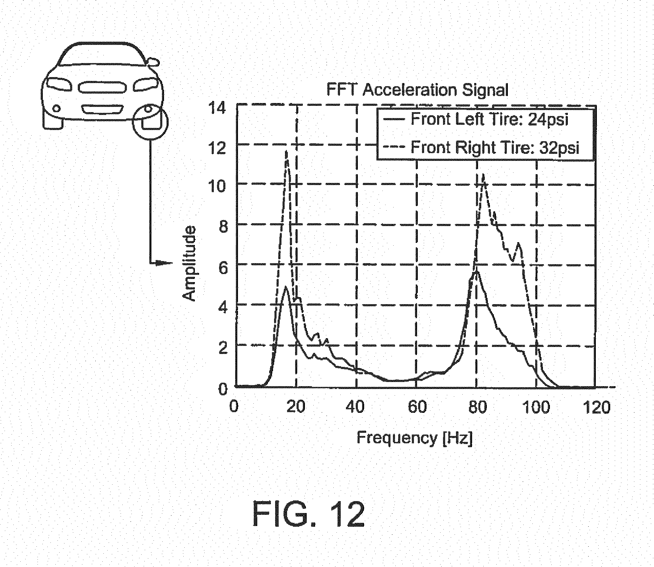

As shown in Figure 12, it has been experimentally determined that wheel hop amplitude is a function of inflation pressure, and appears to scale linearly with inflation pressure. Inflation pressure can be input via a sensor in fluid communication with the tire pressure or manually input by a user. The wheel hop amplitude is measured over a range of known tire inflation pressures.

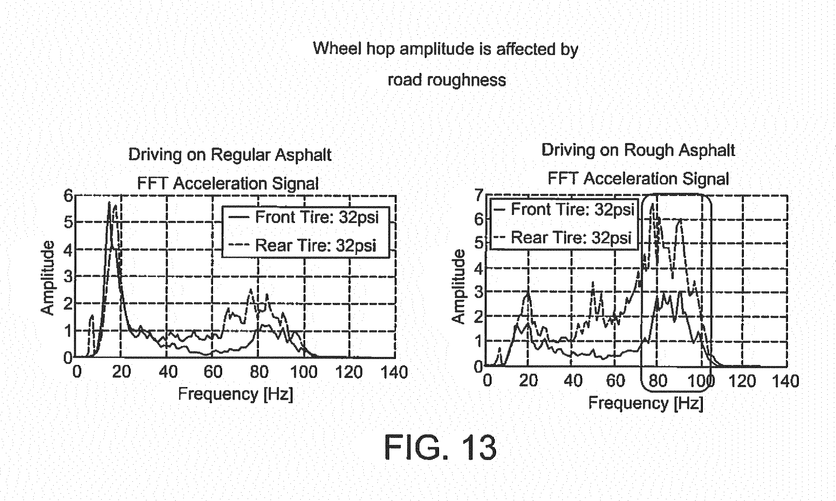

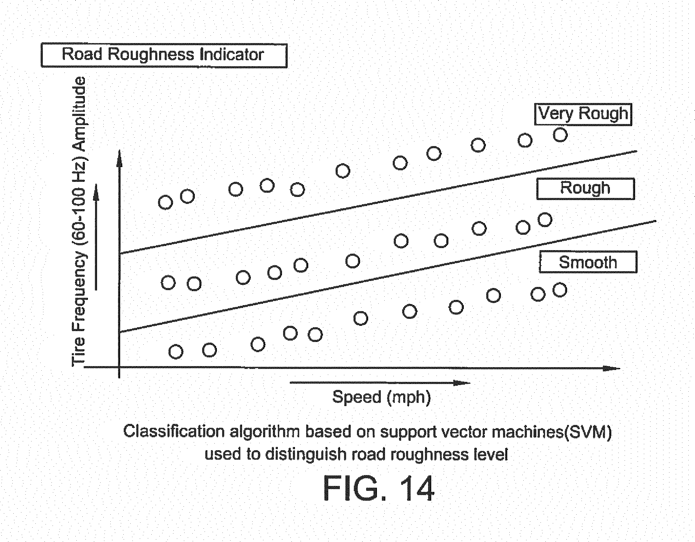

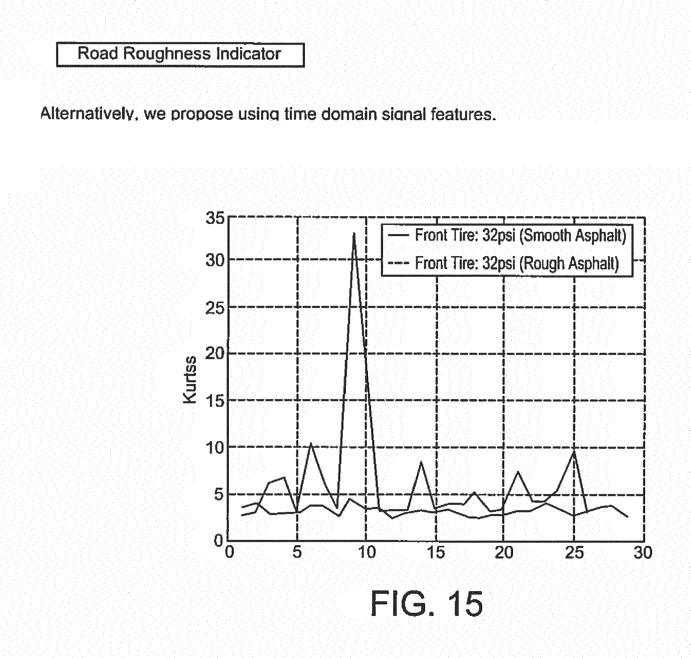

As shown in Figure 13, the vertical acceleration signal is also affected by road roughness. The peak value of the vertical acceleration signal in the 60-100 Hz range is then determined as a function of road roughness for a given inflation pressure and vehicle speed. As shown in Figure 14, a classification algorithm based upon support vector machines may be used to classify the road roughness levels into at least two zones, preferably at least three zones: smooth, rough, very rough.

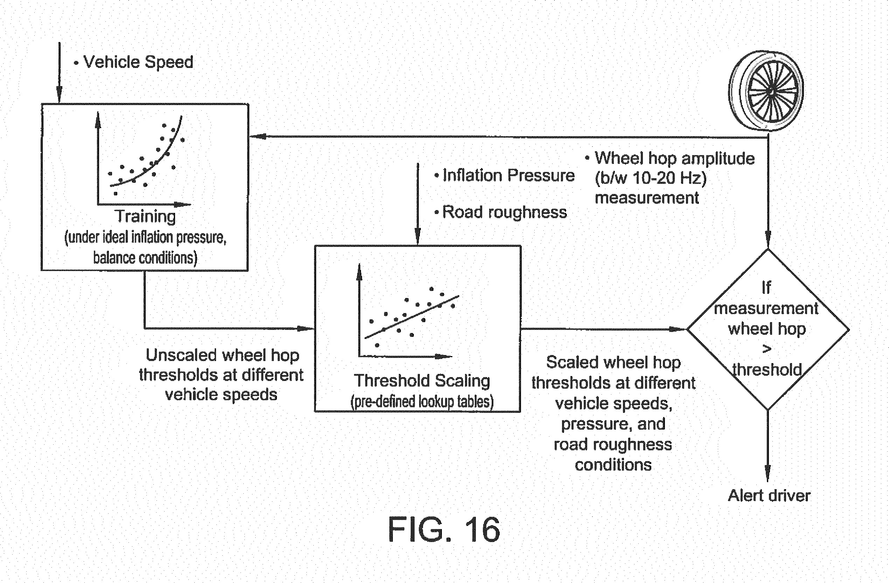

As shown in Figure 16, data sets are generated for wheel hop values as a function of vehicle speed. These data sets are used for training the wheel balance detector over a range of vehicle speeds in order to determine a predetermined threshold value. The wheel balance detector uses an algorithm that utilizes the driving data to learn the predetermined wheel hop thresholds at different vehicle speeds. Linear scaling factors are then used to determine the predetermined wheel hop thresholds at different inflation pressures and road roughness conditions.

Once the predetermined wheel hop thresholds are determined based upon experimental data, the wheel imbalance detector apparatus uses the predetermined thresholds in conjunction with real time inputs which preferably include vehicle speed, tire inflation pressure and tire acceleration data. The wheel imbalance detector apparatus thus preferably uses the real-time vehicle speed, the tire inflation pressure and acceleration data to continuously calculate the wheel hop value and then compare with the predetermined threshold. The predetermined threshold is a function of speed, inflation pressure and road roughness.

## Claims

1. A method for detecting the imbalanced state of a wheel (10) comprising the steps of:
utilizing or measuring a tire acceleration signal and generating or extracting tire vertical mode frequency data;
determining a wheel hop value from the peak of the curve of the tire vertical mode frequency data; and
determining if the wheel hop value is greater than a predetermined threshold value, and then sending an alert if an imbalance is detected;
**characterized in that** (i) a road roughness indicator is determined from a peak of the curve of the tire vertical mode frequency data in the 60 to 100 Hz frequency range; or **in that** (ii) the predetermined threshold value is a function of a road roughness indicator, wherein the road roughness indicator is determined from the peak of the tire vertical mode acceleration signal in the 60 to 100 Hz frequency range.

2. The method of claim 1 further comprising the steps of determining a tire frequency amplitude from the tire vertical mode acceleration signal.

3. The method of at least one of the previous claims wherein the wheel hop value is determined from the peak of the tire vertical mode frequency data in the 10 to 20 Hz frequency range.

4. The method of at least one of the previous claims wherein a vehicle speed is measured, and the predetermined threshold value is a function of vehicle speed.

5. The method of at least one of the previous claims wherein a tire inflation pressure is measured, and the predetermined threshold value is a function of inflation pressure.

6. The method of at least one of the previous claims wherein the predetermined threshold value is adjusted based upon the road roughness indicator.

7. The method of at least one of the previous claims further comprising measuring a tire inflation pressure and a vehicle speed.

8. The method of at least one of the previous claims wherein the predetermined threshold value is a function of inflation pressure and vehicle speed.

9. A wheel imbalance detection apparatus for determining if a wheel (10) is out of balance, the apparatus comprising:
tire vertical mode measuring means for measuring tire vertical mode frequency and generating tire vertical mode frequency data;
tire identification means for generating a tire-specific threshold value using tire-specific identification data; and
a comparator for comparing the vertical mode frequency data with a threshold value.

10. A system comprising the apparatus of claim 9 and a wheel (10), wherein the wheel comprises a wheel-mounted accelerometer (310) for measuring the tire vertical mode frequency.

11. A system comprising the apparatus of claim 9 and a tire (12), wherein the tire (12) comprises a tire-mounted accelerometer (310) for measuring the tire vertical mode frequency.

## Patentansprüche

1. Verfahren zum Erfassen des Unwuchtzustandes eines Rades (10), das die folgenden Schritte umfasst:
Verwenden oder Messen eines Reifenbeschleunigungssignals und Erzeugen oder Extrahieren von Reifenvertikalmodenfrequenzdaten;
Bestimmen eines Radsprungwertes aus der Spitze der Kurve der Reifenvertikalmodenfrequenzdaten; und
Bestimmen, ob der Radsprungwert über einem vorgegebenen Schwellenwert liegt, und dann Senden einer Warnung, wenn eine Unwucht erfasst wird;
**dadurch gekennzeichnet, dass** (i) ein Straßenrauhigkeitsindikator aus einer Spitze der Kurve der Reifenvertikalmodenfrequenzdaten in dem Frequenzbereich von 60 bis 100 Hz bestimmt wird; oder dadurch, dass (ii) der vorgegebene Schwellenwert eine Funktion eines Straßenrauhigkeitsindikators ist, wobei der Straßenrauhigkeitsindikator aus der Spitze des Reifenvertikalmodenbeschleunigungssignals in dem Frequenzbereich von 60 bis 100 Hz bestimmt wird.

2. Verfahren nach Anspruch 1, das ferner die Schritte des Bestimmens einer Reifenfrequenzamplitude aus dem Reifenvertikalmodenbeschleunigungssignal umfasst.

3. Verfahren nach wenigstens einem der vorhergehenden Ansprüche, wobei der Radsprungwert aus der Spitze der Reifenvertikalmodenfrequenzdaten in dem Frequenzbereich von 10 bis 20 Hz bestimmt wird.

4. Verfahren nach wenigstens einem der vorhergehenden Ansprüche, wobei eine Fahrzeuggeschwindigkeit gemessen wird, und der vorgegebene Schwellenwert eine Funktion der Fahrzeuggeschwindigkeit ist.

5. Verfahren nach wenigstens einem der vorhergehenden Ansprüche, wobei ein Reifenfülldruck gemessen wird, und der vorgegebene Schwellenwert eine Funktion des Fülldrucks ist.

6. Verfahren nach wenigstens einem der vorhergehenden Ansprüche, wobei der vorgegebene Schwellenwert basierend auf dem Straßenrauhigkeitsindikator angepasst wird.

7. Verfahren nach wenigstens einem der vorhergehenden Ansprüche, das ferner das Messen eines Reifenfülldrucks und einer Fahrzeuggeschwindigkeit umfasst.

8. Verfahren nach wenigstens einem der vorhergehenden Ansprüche, wobei der vorgegebene Schwellenwert eine Funktion des Fülldrucks und der Fahrzeuggeschwindigkeit ist.

9. Radunwuchterfassungseinrichtung zum Bestimmen, ob ein Rad (10) nicht ausgewuchtet ist, wobei die Einrichtung Folgendes umfasst:
Reifenvertikalmodenmessmittel zum Messen einer Reifenvertikalmodenfrequenz und zum Erzeugen von Reifenvertikalmodenfrequenzdaten;
Reifenidentifikationsmittel zum Erzeugen eines reifenspezifischen Schwellenwertes unter Verwendung reifenspezifischer Identifikationsdaten; und
einen Vergleicher zum Vergleichen der Vertikalmodenfrequenzdaten mit einem Schwellenwert.

10. System, das die Einrichtung nach Anspruch 9 und ein Rad (10) umfasst, wobei das Rad einen auf dem Rad montierten Beschleunigungsmesser (310) zum Messen der Reifenvertikalmodenfrequenz umfasst.

11. System, das die Einrichtung nach Anspruch 9 und einen Reifen (12) umfasst, wobei der Reifen (12) einen auf dem Reifen montierten Beschleunigungsmesser (310) zum Messen der Reifenvertikalmodenfrequenz umfasst.

## Revendications

1. Procédé destiné à détecter l'état de déséquilibre d'une roue (10) comprenant les étapes dans lesquelles :
on utilise ou on mesure un signal d'accélération du bandage pneumatique et on génère ou on extrait des données de fréquence du bandage pneumatique en mode vertical ;
on détermine une valeur de sautillement de la roue à partir du pic de la courbe des données de fréquence du bandage pneumatique en mode vertical ; et
on détermine le fait de savoir si la valeur de sautillement de la roue est supérieure à une valeur seuil prédéterminée et on envoie ensuite une alerte lorsqu'on détecte un déséquilibre ;
**caractérisé en ce que** (i) l'on détermine un indicateur de la rugosité de la route à partir d'un pic de la courbe des données de fréquence du bandage pneumatique en mode vertical dans la plage de fréquences de 60 à 100 Hz ; ou **en ce que** (ii) la valeur seuil prédéterminée représente une fonction d'un indicateur de la rugosité de la route ; dans lequel on détermine l'indicateur de la rugosité de la route à partir du pic du signal d'accélération du bandage pneumatique en mode vertical dans la plage de fréquences de 60 à 100 Hz.

2. Procédé selon la revendication 1, comprenant en outre l'étape dans laquelle on détermine une amplitude de fréquence du bandage pneumatique à partir du signal d'accélération du bandage pneumatique en mode vertical.

3. Procédé selon au moins une des revendications précédentes, dans lequel on détermine la valeur de sautillement de la roue à partir du pic des données de fréquence du bandage pneumatique en mode vertical dans la plage de fréquences de 10 à 20 Hz.

4. Procédé selon au moins une des revendications précédentes, dans lequel on mesure une vitesse du véhicule et la valeur seuil prédéterminée représente une fonction de la vitesse du véhicule.

5. Procédé selon au moins une des revendications précédentes, dans lequel on mesure une pression de gonflage du bandage pneumatique et la valeur seuil prédéterminée représente une fonction de la pression de gonflage.

6. Procédé selon au moins une des revendications précédentes, dans lequel on règle la valeur seuil prédéterminée en se basant sur l'indicateur de la rugosité de la route.

7. Procédé selon au moins une des revendications précédentes, comprenant en outre le fait de mesurer une pression de gonflage du bandage pneumatique et une vitesse du véhicule.

8. Procédé selon au moins une des revendications précédentes, dans lequel la valeur seuil prédéterminée représente une fonction de la pression de gonflage et de la vitesse du véhicule.

9. Appareil de détection d'un déséquilibre d'une roue destiné à déterminer le fait de savoir si une roue (10) se trouve dans un état de déséquilibre, l'appareil comprenant :
un moyen de mesure du bandage pneumatique en mode vertical pour la mesure de la fréquence du bandage pneumatique en mode vertical et pour la génération des données de fréquence du bandage pneumatique en mode vertical ;
un moyen d'identification du bandage pneumatique pour la génération d'une valeur seuil spécifique au bandage pneumatique en utilisant des données d'identification spécifiques au bandage pneumatique ; et
un dispositif de comparaison destiné à comparer les données de fréquence en mode vertical à une valeur seuil.

10. Système comprenant l'appareil selon la revendication 9 et une roue (10), dans lequel la roue comprend un accéléromètre (310) monté sur une roue, destiné à mesurer la fréquence du bandage pneumatique en mode vertical.

11. Système comprenant l'appareil selon la revendication 9 et un bandage pneumatique (12), dans lequel le bandage pneumatique comprend un accéléromètre (310) monté sur une roue, destiné à mesurer la fréquence du bandage pneumatique en mode vertical.
